## Europäisches Patentamt
## European Patent Office
## Office européen des brevets

(11) Publication number: **0 243 434**
**B1**

(12) **EUROPEAN PATENT SPECIFICATION**

(45) Date of publication of patent specification: **16.05.90**

(21) Application number: **86906372.7**

(22) Date of filing: **17.10.86**

(86) International application number:
**PCT/GB86/00637**

(87) International publication number:
**WO 87/02447 23.04.87 Gazette 87/09**

(51) Int. Cl.⁵: **G 01 B 3/16**

(54) **FABRIC MEASURING DEVICE.**

(30) Priority: **18.10.85 GB 8525714**

(43) Date of publication of application:
**04.11.87 Bulletin 87/45**

(45) Publication of the grant of the patent:
**16.05.90 Bulletin 90/20**

(84) Designated Contracting States:
**DE FR GB**

(56) References cited:
**FR-A- 943 641**
**GB-A- 115 763**
**US-A-1 367 277**

(73) Proprietor: **LAURA ASHLEY LIMITED**
**Carno**
**Powys SY17 5LO (GB)**

(72) Inventor: **HOLBROOK, Graham, Redvers**
**Pencincoed**
**Llanidloes**
**Powys (GB)**
Inventor: **ROBERTSON, Stuart, Mark 6 Uchel**
**Dre**
**Kerry Newton**
**Powys (GB)**

(74) Representative: **Butler, Michael John et al**
**FRANK B. DEHN & CO. Imperial House 15-19**
**Kingsway**
**London, WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This specification relates to a fabric measuring device, and in particular to a device for measuring the length of fabric wound on a roll.

In the past the accurate determination of the length of fabric wound on a roll has posed particular problems to the fabric manufacturing and retailing trade, especially during stock-taking. Conventionally in order to determine the length of fabric on a roll it has been necessary to either unroll the fabric and measure the length directly, a very impractical and awkward operation, or else to make a rough estimate of the length of fabric, perhaps by eye alone, with the fabric still wound on the roll. This latter method is unreliable since it relies on the judgement and experience of the persons concerned. Clearly it would be desirable to provide a device by means of which the length of a roll of fabric could be measured, accurately and reliably, while the fabric is in the rolled condition.

There is known from GB 175904 a device which enables the length of a roll of fabric to be measured. This hand-held device comprises a head and a prong which are spring-biassed together, but which may be moved apart by operation of a handle which is connected to the head. Also connected to the head is a pivotally mounted pointer which moves over a calibrated scale as the head and prong are moved relative to each other. In use the device is gripped by the handle and the head and prong are moved far apart from each other. The prong is then inserted into the centre of the roll of fabric and the head allowed to move towards the prong so that a thickness of fabric from the centre of the roll to the circumference thereof is held between the head and prong. The scale is calibrated so that the pointer indicates the length of material on the roll when it is held in the above described fashion.

Although this device provided a more accurate method for determining the length of fabric than was previously known, it is not without certain limitations and disadvantages. The prong must be inserted into the core of the roll at one end thereof which means that the measurement of the roll length must be carried out at an end of the roll, which is not always the best place to get an accurate measurement. In addition the device must be applied to the roll along the longitudinal axis of the roll, a direction which is often inconvenient. Furthermore the device is awkward to use in that effort must be expended to hold the head and prong apart from each other before applying the device to a roll of fabric.

Viewed from one broad aspect there is herein disclosed a measuring device for measuring the length of a fabric material wound on a roll, comprising two jaw members arranged for relative pivotal movement and spring-biassed toward each other, said jaw members having distal ends adapted so that said jaw members are moved apart by engagement of the distal ends with a roll of fabric as the measuring device is applied to the roll in a radial direction, and means for indicating the length of fabric material wound on said roll in response to the separation of said jaw members after the measuring device has been applied to the roll.

With this arrangement the measuring device is applied to a roll of fabric in the convenient radial direction, i.e. normal to the axis of the roll, at any suitable position along its length in one simple pushing operation.

Preferably the distal ends of the jaw members have convex facing surfaces which curve away from each other. For example, the ends may be of circular or part circular cross-section, being cylindrical or spherical for example.

In one form the indicating means may comprise a pointer mounted for movement with one of the jaw members and a calibrated scale fixed relative to the other jaw member, the pointer moving over the calibrated scale as the jaw members are moved relative to each other. In a preferred form there may be a series of scales, each scale being calibrated for a different fabric material, such as cotton, PVC, upholstery material, chintz etc. Alternatively the indicating means may be an electronic device, with perhaps a liquid crystal display unit or similar digital read-out device, suitable sensors being provided to detect the degree of displacement of the jaws. One or more switches or the like could be used to select the fabric type.

The jaw members are preferably directly pivotally secured together. The jaw members may be shaped so that they diverge from the pivot and then in the rest condition converge towards the distal ends. A handle is preferably provided and this can be an extension of one of the jaw members.

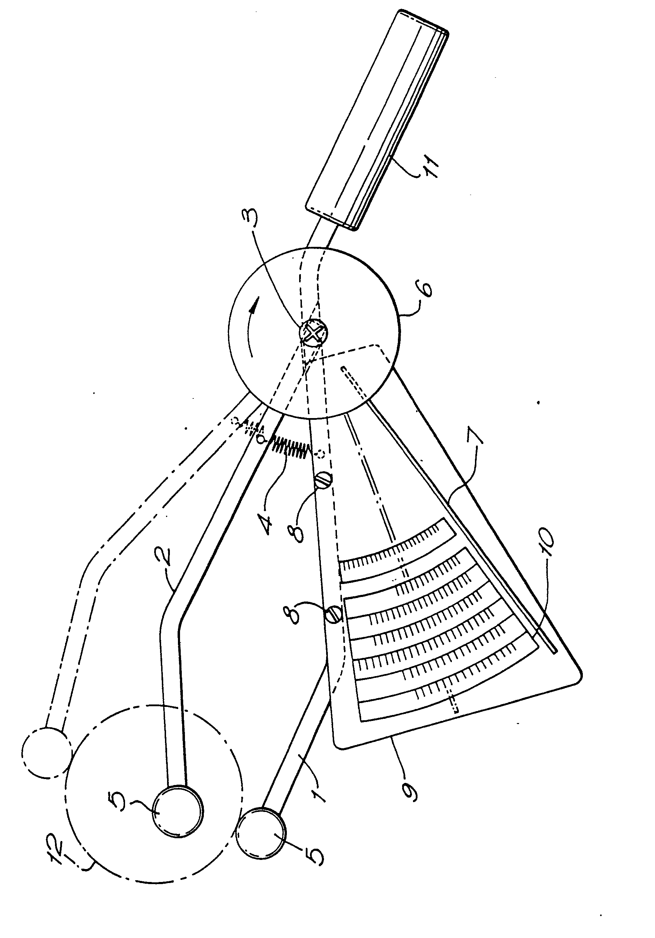

An embodiment of some of the broad aspects discussed above will now be described by way of example with reference to the accompanying drawing which is a plan view of an embodiment of the measuring device.

Referring to the drawing the measuring device comprises a fixed jaw member 1 and a moving jaw member 2 pivotally connected at a pivot point 3. The jaw members are biassed toward each other by means of a spring 4 the ends of which are fixed to the jaw members. Each of the jaw members 1, 2 is provided with a rounded distal end 5, these distal ends being designed to engage a roll of fabric material in use as will be described hereinbelow. The distal ends are in the form of cylinders of e.g. plastic material having smooth surfaces to reduce friction.

Connected to moving jaw member 2 at the pivot point 3 is an indicator member in the form of a disc 6 to which is secured an associated pointer 7. Mounted on fixed jaw member 1 by screws 8 is a plate 9 on which is provided a series of calibrated scales 10, each of the scales being calibrated for a different fabric material. An extension of fixed jaw member 1, on the other side of pivot part 3, is formed as a handle 11.

Between the pivot point 3 and the distal ends 5, the jaw members 1 and 2 are shaped so that, in the rest position, they are divergent-convergent.

In use the measuring device is held by the handle 11 and is applied to a roll 12 of fabric material radially, i.e. normal to the axis of the roll. Because of the shape of the distal ends 5 of the jaw members 1, 2 which are curved away from each other, as the device is applied to the roll 12, the jaw members are smoothly pushed apart against the bias of the spring 4 as the distal ends 5 follow the surface of the roll. The measuring device is finally held in a position wherein the jaws of the device are separated to the greatest extent, as is shown in broken lines in the figure. This position corresponds to the distal ends 5 being separated by the full diameter of the roll 12.

As the jaw members are moved apart on application of the device to a fabric roll, the indicator disc 6 and its associated pointer 7, which are fixed to the jaw member 2, turn in the direction shown by the arrow in the figure and the pointer 7 is moved over the calibrated scales 10. The scales 10 are calibrated according to fabric thickness, each for a different material such as cotton, PVC, upholstery material, chintz etc., so that the pointer 7 indicates the length of material on a roll of a particular width.

The measuring device may be made of any suitable materials. The jaw members could for example be made of aluminium which is light but sufficiently strong that the members are not likely to be bent, and thus the calibration affected, if the device is dropped or receives a blow. The distal ends of the jaw members are preferably formed of a smooth plastic material such as nylon or the like.

Modifications to the specific embodiment and to the broad aspects discussed may be apparent to those skilled in the art.

## Claims

1. A measuring device for measuring the length of a fabric material wound on a roll, comprising two jaw members (1, 2) arranged for relative pivotal movement and spring-biassed towards each other, and means (9) for indicating the length of fabric material wound on said roll in response to the separation of said jaw members (1, 2) after the measuring device has been applied to the roll, characterised in that said jaw members have distal ends (5) adapted so that said jaw members (1, 2) are moved apart by engagement of the distal ends (5) with a roll of fabric as the measuring device is applied to the roll in a radial direction.

2. A device according to claim 1 wherein the distal ends (5) of said jaw members (1, 2) have convex facing surfaces that curve away from each other.

3. A device according to claim 2 wherein said distal ends (5) have a circular cross-section.

4. A device according to any preceding claim wherein the distal ends (5) of said jaw members (1, 2) are formed of a smooth plastic material.

5. A device according to any preceding claim wherein said indicating means (9) comprises a pointer (7) mounted for movement with one of said jaw members (1, 2) and a calibrated scale (10) fixed relative to the other said jaw member, the pointer (7) moving over the calibrated scale (10) as the jaw members (1, 2) are moved relative to each other.

6. A device according to claim 5 including a series of scales (10), each scale being calibrated for a different fabric material.

7. A device according to any of claims 1 to 4 wherein said indicating means (9) comprises an electronic device.

8. A device according to any preceding claim wherein said jaw members (1, 2) are directly pivotally secured together.

9. A device according to claim 8 wherein said jaw members (1, 2) diverge from the pivot and then, in the rest condition, converge towards the distal ends (5).

10. A device according to any preceding claim wherein a handle (11) is provided as an extension of one of the jaw members (1, 2).

## Patentansprüche

1. Meßvorrichtung zum Messen der Länge von auf eine Rolle gewickeltem Textilmaterial mit zwei zueinander gelenkig beweglich angeordneten und gegeneinander federbelasteten Backenteilen (1, 2), und mit Mitteln (9) zum Anzeigen der Länge des auf die Rolle gewickelten Textilmaterials gemäß dem Abstand der Backenteile (1, 2), nachdem die Meßvorrichtung an die Rolle anlegt wurde, dadurch gekennzeichnet, daß die Backenteile (1, 2) distale Enden (5) aufweisen, die geeignet sind, die Backenteile (1, 2) durch Anliegen der Enden (5) auf einer Rolle des Textilmaterials auseinander zu bewegen, wenn die Meßvorrichtung in radialer Richtung an die Rolle angelegt wird.

2. Vorrichtung nach Anspruch 1, dadurch gekennzeichnet, daß die distalen Enden (5) der Backenteile (1, 2) konvexe, voneinander weg gekrümmte Anlageflächen aufweisen.

3. Vorrichtung nach Anspruch 2, dadurch gekennzeichnet, daß die distaien Enden (5) einen kreisförmigen Querschnitt aufweisen.

4. Vorrichtung nach einem der vorhergehenden Ansprüchen, dadurch gekennzeichnet, daß die distalen Enden (5) der Backenteile (1, 2) aus weichem Plastikmaterial geformt sind.

5. Vorrichtung nach einem der vorhergehenden Ansprüche, dadurch gekennzeichnet, daß die Anzeigemittel (9) mit einem Zeiger (7) versehen sind, der zur Bewegung mit einem der Backenteile (1, 2) verbunden ist, daß eine geeichte Skala (10) relativ zum anderen Backenteil fixiert ist, und daß der Zeiger (7) über die geeichte Skala (10) bewegt wird, wenn die Backenteile (1, 2) relativ zueinander bewegt werden.

6. Vorrichtung nach Anspruch 5, dadurch gekennzeichnet, daß eine Serie von jeweils auf unterschiedliche Textilmaterialien geeichten Skalen (10) vorgesehen ist.

7. Vorrichtung nach einem der Ansprüche 1 bis 4, dadurch gekennzeichnet, daß die Anzeigemittel (9) eine elektronische Einrichtung aufweisen.

8. Vorrichtung nach einem der vorhergehenden Ansprüche, dadurch gekennzeichnet, daß die Backenteile (1, 2) direkt miteinander gelenkig verbunden sind.

9. Vorrichtung nach Anspruch 8, dadurch gekennzeichnet, daß die Backenteile (1, 2) vom Gelenk her auseinanderstreben und im weiteren Verlauf in Richtung der distalen Enden (5) aufeinander zu weisen.

10. Vorrichtung nach einem der vorhergehenden Ansprüche, dadurch gekennzeichnet, daß in Verängerung eines der Backenteile (1, 2) ein Handgriff (11) vorgesehen ist.

**Revendications**

1. Dispositif de mesure destiné à mesurer la longueur d'un matériau de type tissu enroulé sur un cylindre, comprenant deux mâchoires (1, 2) disposées pour avoir un mouvement relatif de pivotement l'une par rapport à l'autre et sollicitées élastiquement l'une vers l'autre, et des moyens (9) destinés à indiquer la longueur de type tissu enroulé sur ledit cylindre en réponse à l'écartement des mâchoires (1, 2) après que le dispositif de mesure ait été appliqué au cylindre, caractérisé en ce que les mâchoires ont des extrémités distales (5) agencées de façon telle que les mâchoires (1, 2) sont écartées par mise en contact des extrémités distales (5) avec un rouleau de tissu lorsque le dispositif de mesure est appliqué au rouleau dans une direction radiale.

2. Dispositif selon la revendication 1, caractérisé en ce que les extrémités distales (5) des mâchoires (1, 2) ont des surfaces en visàvis convexes qui sont courbées en s'éloignant l'une de l'autre.

3. Dispositif selon la revendication 2 caractérisé en ce que les extrémités distales (5) ont une section circulaire.

4. Dispositif selon l'une quelconque des revendications précédentes caractérisé en ce que les extrémités distales (5) des mâchoires (1, 2) sont formées d'un matériau plastique lisse.

5. Dispositif selon l'une quelconque des revendications précédentes caractérisé en ce que les moyens indicateurs (9) comportent une aiguille (7) montée pour être mise en mouvement avec l'une des mâchoires (1, 2) et une échelle graduée (10) fixée sur l'autre mâchoire, l'aiguille (7) se déplaçant au-dessus de l'échelle graduée (10) lorsque les mâchoires (1, 2) sont mises en mouvement l'une par rapport à l'autre.

6. Dispositif selon la revendication 5 comportant une série d'échelles (10), chaque échelle étant graduée pour un matériau formant tissu différent.

7. Dispositif selon l'une quelconque des revendications 1 à 4 caractérisé en ce que les moyens indicateurs (9) comportent un dispositif électronique.

8. Dispositif selon l'une quelconque des revendica tions précédentes caractérisé en ce que les mâchoires (1, 2) sont fixées directement l'une à l'autre et de manière pivotante.

9. Dispositif selon la revendication 8 caractérisé en ce que les mâchoires (1, 2) divergent à partir du pivot puis, en position de repos, convergent vers les extrémités distales (5).

10. Dispositif selon l'une quelconque des revendications précédentes caractérisé en ce qu'une poignée (11) est prévue en tant que prolongement de l'une des mâchoires (1, 2).